# FASCICULE DE BREVET EUROPEEN

(11) **EP 3 609 962 B1**
(45) Date de publication et mention de la délivrance du brevet: **24.03.2021**
(21) Numéro de dépôt: 18722684.0
(22) Date de dépôt: 09.04.2018
(51) Int. Cl.: C09D 13/00, B43K 19/18, C08K 3/04, C08K 7/22

(54) **MINE DE CRAYON A PAPIER**
BLEISTIFTMINEN
PAPER PENCIL LEAD

(30) Priorité: 10.04.2017 FR 1753102
(43) Date de publication de la demande: 19.02.2020
(73) Titulaire: Société BIC, 92110 Clichy (FR)
(72) Inventeur: GOUEREC, Julien, 62200 Boulogne-Sur-Mer (FR); CLAPTIEN, Frédéric, 62830 Samer (FR); LEFEBVRE, Philippe, 62930 Wimereux (FR); DEBRAUWER, Christelle, Quebec, G1S3T3 (CA)
(74) Mandataire: Cabinet Beau de Loménie
(86) Numéro de dépôt international: PCT/FR2018/050882
(87) Numéro de publication internationale: WO 2018/189467

(56) Documents cités:
- WO-A1-2016/097553
- FR-A1- 2 637 906
- JP-A- S5 714 666
- US-A1- 2012 037 035
- US-A1- 2013 330 112

## Description

La présente invention concerne une mine de crayon à papier non calcinée à base de polymère comprenant du graphite expansé.

Le graphite naturel est couramment utilisé dans les mines de crayons à papier extrudables à base de polymère (c'est-à-dire synthétiques et non calcinées) tel que par exemple dans la demande WO2016/097553. Le choix du type de graphite naturel et le ratio massique entre le graphite et le polymère de la mine sont connus pour jouer un rôle sur la noirceur de la marque obtenue avec le crayon à papier et donc ont un impact sur l'efficacité du gommage. Mais l'inconvénient est que les propriétés mécaniques sont également impactées. En outre le polymère, les plastifiants et les additifs de ce type de mine gênent l'action du gommage. En effet, ces matériaux empêchent la gomme d'être en contact direct avec le graphite à enlever lors du gommage de la surface de la feuille de papier. La gomme doit donc enlever à la fois le graphite et les dérivés de plastiques, ce qui n'est jamais réalisé parfaitement. Le gommage laisse donc en général une marque/ombre sombre sur le papier.

Les inventeurs se sont aperçus de façon surprenante qu'un type de graphite particulier, le graphite expansé, permettait d'améliorer l'action du gommage des marques laissées par les mines de crayon à papier synthétiques, c'est-à-dire à base de polymère, malgré la présence de ces matières plastiques, sans avoir d'impact négatif sur les propriétés mécaniques. En effet, la différence entre le graphite naturel et le graphite expansé est que la couche intermédiaire entre 2 lamelles de graphite est beaucoup plus importante pour le graphite expansé. Les inventeurs pensent donc que cette particularité agit comme une nano charge qui semble empêcher les fines particules de s'enfoncer dans les fibres du papier. Le gommage est alors plus efficace. L'amélioration de l'efficacité de gommage est visible par exemple par comparaison entre un exemple selon la demande WO2016/097553 (exemple comparatif 1) et un exemple avec du graphite expansé à la place du graphite naturel (exemple 1).

D'après la demande JP57-014666, il est connu d'utiliser le graphite expansé en mélange avec du graphite naturel dans des mines calcinées pour améliorer ses propriétés mécaniques.
Toutefois ce type de mine ne contient pas de matières plastiques à la fin du procédé, c'est-à-dire dans la mine finale. En effet, les résines synthétiques présentes initialement dans la composition ne sont utilisées que pour la mise en œuvre du matériau : elles aident à la mise en forme de la mine sous forme de fil par un procédé de filage par compression (qui a été de façon erronée dénommée procédé d'extrusion dans la demande JP57-014666). Puis elles sont éliminées progressivement jusqu'à disparition complète dans le procédé de fabrication lors de l'étape de calcination. Ce type de mine ne rencontre donc pas le même problème technique que les mines à base de polymère selon l'invention, c'est à dire les problèmes de difficulté de gommage, puisque le graphite seul se retrouve dans la trace à gommer sur le papier.
La demande de brevet US 2012/0037035 décrit un graphite sous forme de pétale ayant des propriétés physiques particulières. Toutefois d'après les exemples un tel graphite est d'origine naturel et n'est pas un graphite expansé.
En outre il n'est pas utilisé tel quel dans les mines de crayons à papier mais en association avec des nanoparticules qui sont mises en contact avec ce graphite et même y adhèrent de façon à former un composite (paragraphe 0013).

Par ailleurs d'après les exemples, les mines de crayon à papier contenant un tel graphite sont des mines calcinées.
Enfin, le but de l'utilisation de ce graphite particulier et du composite qu'il forme avec les microparticules n'est pas d'améliorer les performances de gommage mais au contraire de renforcer la couleur des traits tracés avec la mine du crayon à papier qui le contient.

La présente invention concerne donc une mine de crayon à papier à base de polymère, extrudable, non expansée, non calcinée, comprenant du graphite, caractérisée en ce que 25 à 100% en poids par rapport au poids total graphite, avantageusement 50 à 100% en poids, dudit graphite consiste en du graphite expansé.

La mine selon la présente invention appartient donc à la catégorie des mines graphites à base de polymère, aussi appelée mine synthétique, et est donc non-calcinée. Ainsi aucune étape de calcination n'est utilisée lors de son procédé de fabrication.
On entend au sens de présente invention par «mine de crayon à papier à base de polymère», toute mine de crayon à papier comprenant au moins un polymère. Ce polymère a ainsi la fonction de matrice pour la réalisation de la mine au cours du procédé de fabrication et régit également les propriétés mécaniques, de qualité d'écriture et de gommage dans le produit fini.
Dans un mode de réalisation avantageux, la mine selon l'invention comprend entre 15 et 40 %, avantageusement entre 20 et 35 %, encore plus avantageusement entre 25 et 32%, en poids d'un polymère par rapport au poids total de la mine.
Dans un autre mode de réalisation avantageux, le polymère de la mine est choisi dans le groupe constitué par une polyoléfine, un polymère styrénique et leurs mélanges. Si un mélange de polyoléfine et de polymère styrénique est utilisé, un comptabilisant connu de l'homme de métier (ex : polyoléfine greffée anhydride maléique, Fusabond de chez Dupont) peut être ajouté.
Dans le cas où la mine comprend une polyoléfine, elle sera dénommée dans le cadre de la présente invention « mine à base de polyoléfine ».
Ainsi, on entend au sens de présente invention par « mine de crayon à papier à base de polyoléfine », toute mine de crayon à papier comprenant au moins une polyoléfine. De façon avantageuse dans une mine à base de polyoléfine selon l'invention, la polyoléfine est le principal polymère de la mine. De façon encore plus avantageuse la mine à base de polyoléfine ne comprend pas d'autres polymères. Avantageusement la polyoléfine peut-être choisie dans le groupe constitué par du polyéthylène, du polypropylène et leurs mélanges, en particulier il s'agit du polypropylène, plus particulièrement du polypropylène homopolymère.
Dans le cas où la mine comprend un polymère styrénique, elle sera dénommée dans le cadre de la présente invention « mine à base de polymère styrénique ».
Ainsi, on entend au sens de présente invention par « mine de crayon à papier à base de polymère styrénique », toute mine de crayon à papier comprenant au moins un polymère styrénique. De façon avantageuse dans une mine à base de polymère styrénique selon l'invention, le polymère styrénique est le principal polymère de la mine. De façon encore plus avantageuse la mine à base de polymère styrénique ne comprend pas d'autres polymères. Avantageusement le polymère styrénique est choisi dans le groupe constitué par du polystyrène (PS), un copolymère styrène-acrylonitrile (SAN), un copolymère acrylonitrile-butadiène-styrène (ABS) et leurs mélanges, en particulier dans le groupe constitué par un copolymère acrylonitrile-butadiène-styrène (ABS) et du polystyrène (PS).

Dans encore un autre mode de réalisation avantageux, le polymère de la mine est choisi dans le groupe constitué par du polyéthylène, du polypropylène, du polystyrène, un copolymère styrène-acrylonitrile, un copolymère acrylonitrile-butadiène-styrène et leurs mélanges.
La mine selon la présente invention est extrudable, c'est-à-dire qu'elle peut être obtenue par extrusion. De façon avantageuse elle est extrudée. La mine selon la présente invention est non expansée, malgré la présence de graphite expansé dans sa composition. En effet, aucun agent d'expansion n'est utilisé lors de son procédé de fabrication. En outre le polymère utilisé n'est pas expansé.
La mine selon la présente invention est une mine de crayon à papier, c'est-à-dire destinée à être utilisée dans des crayons à papier, en particulier dans des crayons à papier enrobés de bois ou de matière synthétique de bois, comprenant éventuellement une couche intermédiaire de protection, en particulier tel que décrit dans la demande de brevet WO01/43987.

La mine de crayon à papier selon l'invention comprend donc du graphite dont 25 à 100% en poids par rapport au poids total du graphite, avantageusement 50 à 100% en poids, dudit graphite consiste en du graphite expansé.
Dans un mode de réalisation avantageux, 100% en poids dudit graphite consiste en du graphite expansé.
Le graphite expansé peut être fabriqué à partir du graphite naturel ou synthétique par des méthodes biens connues de l'homme du métier, telle que par insertion d'acide, en particulier d'acide sulfurique, dans la structure lamellaire du graphite. Le graphite ainsi obtenu est appelé graphite expansable. Il subit ensuite un choc thermique à très haute température : l'élément d'insertion se vaporise et expanse chaque cristallite de graphite.
Le graphite expansé est également disponible commercialement sous la dénomination TG-679 GRAFOIL chez la société GrafTech international, sous la dénomination TIMREX® BNB90 chez la société Imerys, sous la dénomination SC 20 OS chez la société Graphit Kropfmühl GmbH ou sous la dénomination SC 5 O QKG chez la société QUINDAO KROPFMUEHL GRAPHITE.
La surface spécifique (méthode BET) du graphite expansé selon l'invention est avantageusement supérieure à 18 m²/g, en particulier ≥ 20 m²/g.
La teneur en soufre du graphite expansé selon l'invention est avantageusement supérieure à 400 ppm, en particulier ≥ 500ppm par rapport au poids total du graphite expansé.
Dans un mode de réalisation avantageux, la mine de crayon à papier selon l'invention comprend entre 40 et 60 %, avantageusement entre 44 et 50 %, en poids de graphite par rapport au poids total de la mine, dont 25 à 100% en poids par rapport au poids total du graphite, avantageusement 50 à 100% en poids, encore plus avantageusement 100% en poids dudit graphite consiste en du graphite expansé.
Ainsi avantageusement la mine de crayon à papier selon l'invention peut comprendre entre 10 et 60% en poids, avantageusement entre 11 et 60% en poids, plus avantageusement entre 20 et 60% en poids, encore plus avantageusement entre 22 et 50% en poids de graphite expansé, par rapport au poids total de la mine.
Le reste du graphite, s'il est présent, est non expansé et peut être du graphite naturel.
Le graphite qu'il soit expansé ou non expansé peut être sous forme de poudre.

En particulier le graphite, qu'il soit expansé ou non expansé, a une taille de particules D50 en volume mesurée par granulométrie laser, par exemple par un granulomètre laser (diffraction) de marque Sympatec Helios, comprise entre 4 et 40 µm, avantageusement entre 15 et 40 µm, plus avantageusement entre 15 et 25 µm (mesure volumétrique de la distribution de taille des particules - Fraunhofer méthode ISO 13320).
Le graphite permet de conférer à la mine une partie de ses bonnes propriétés mécaniques, en particulier de résistance à la flexion, et de la douceur lors de l'écriture tout en lui apportant une partie de la noirceur. Le graphite expansé permet en outre d'améliorer les propriétés de gommage.
Avantageusement le graphite selon l'invention, en particulier le graphite expansé, n'est pas utilisé en association avec des microparticules, en particulier telles que décrites dans la demande de brevet US2012/0037035 et encore plus particulièrement ne forme pas de composite avec de telles microparticules.
De façon encore plus avantageuse, il ne s'agit pas d'un graphite sous forme de pétale ayant les propriétés physiques particulières telles que décrites dans la demande de brevet US2012/0037035.

La mine de crayon à papier selon l'invention peut en outre comprendre, en dehors du polymère et du graphite, une charge minérale incolore ou blanche, en particulier en une teneur comprise entre 5 et 15 %, avantageusement entre 6 et 10 %, en poids par rapport au poids total de la mine.
Dans un mode de réalisation avantageux la charge minérale incolore ou blanche est choisie dans le groupe constitué par une argile, du talc, du nitrure de bore, de la silice, du carbonate de calcium, du mica, de la poudre de stéatite et leurs mélanges, avantageusement elle est choisie dans le groupe constitué par une argile, de la silice, du talc et leurs mélanges. Plus avantageusement il s'agit d'une charge minérale incolore ou blanche lamellaire, plus particulièrement choisie dans le groupe constitué par une argile, du nitrure de bore, du mica, du talc et leurs mélanges. De façon particulièrement avantageuse il s'agit d'une argile, en particulier choisie dans le groupe constitué par la montmorillonite, la bentonite, le kaolin et leurs mélanges, plus particulièrement il s'agit du kaolin, en particulier du kaolin ayant une taille de particules D50 en masse mesurée par sédimentation par exemple en utilisant un appareil SEDIGRAPH® de la société Micromeritics, comprise entre 2 et 5 µm, par exemple commercialisé par la société SOKA sous la dénomination BLANKALITE 77.
La silice et le talc ont pour but d'apporter des propriétés mécaniques à la mine, telle que la résistance à la flexion et/ou la résistance à la rupture. Les charges minérales lamellaires ont pour but d'apporter de la douceur lors de l'écriture et de maintenir une structure qui se délite sur le papier à l'image des feuillets de graphite.

La mine de crayon à papier selon l'invention peut en outre comprendre du noir de carbone, en particulier en une teneur comprise entre 5 et 20 %, avantageusement entre 5 et 15 %, en poids par rapport au poids total de la mine.
Le noir de carbone utilisé est en particulier du noir de carbone enrobé par ou mélangé avec une cire de polyoléfine ou une polyoléfine, en particulier enrobé par ou mélangé avec une cire de polyoléfine (par exemple sous forme d'un mélange maître, d'une préparation pigmentaire ou d'une dispersion de noir de carbone dans une cire ou dans la polyoléfine, en particulier dans une cire).

Le noir de carbone permet d'apporter la noirceur à la mine alors que la cire de polyoléfine ou la polyoléfine permet d'améliorer la facilité de gommage puisqu'elle évite à la poudre de noir de carbone de pénétrer le support sur lequel est réalisée la marque avec le crayon à papier comprenant la mine selon la présente invention. Le mélange ou l'enrobage avec la polyoléfine ou la cire de polyoléfine a donc lieu avant l'ajout dans la composition de la mine selon l'invention.
La cire de polyoléfine est plus avantageuse qu'une polyoléfine car la douceur sur le papier est meilleure avec un noir de carbone mélangé avec ou enrobé par une cire de polyoléfine plutôt que par une polyoléfine. D'autre part, la dispersion dans le mélange et donc l'homogénéité et la noirceur sont meilleures avec l'utilisation d'un enrobage ou d'un mélange avec la cire de polyoléfine.
De façon avantageuse la polyoléfine est du polypropylène ou du polyéthylène ou leur mélange, avantageusement il s'agit de polyéthylène, par exemple de polyéthylène basse densité.
Dans un mode de réalisation particulier, la teneur en noir de carbone du noir de carbone enrobé par ou mélangé avec une cire de polyoléfine ou une polyoléfine est compris entre 25 et 65 % en poids, avantageusement entre 30 et 60 % en poids, par rapport au poids total du noir de carbone enrobé par ou mélangé avec une cire de polyoléfine ou une polyoléfine. Dans un mode de réalisation particulièrement avantageux, le noir de carbone utilisé dans la mine selon la présente invention est le noir de carbone enrobé par une cire de polyoléfine. Avantageusement, dans ce cas, la teneur en noir de carbone du noir de carbone enrobé par une cire de polyoléfine est comprise entre 40 et 65 % en poids par rapport au poids total du noir de carbone enrobé par une cire de polyoléfine.

De façon avantageuse la cire de polyoléfine est une cire de polypropylène ou de polyéthylène ou de leur mélange, avantageusement il s'agit d'une cire de polyéthylène, par exemple de polyéthylène basse densité. Avantageusement le noir de carbone enrobé par une cire de polyoléfine est disponible commercialement auprès de la société SunChemical sous la dénomination Sunfast® PE Flush Black L47-9000.

La mine de crayon à papier selon la présente invention peut enfin comprendre un additif, en particulier en une teneur comprise entre 0 et 16 %, avantageusement entre 5 et 15 %, en poids par rapport au poids total de la mine.
Cet additif peut être choisi parmi les additifs bien connus de l'homme du métier dans le domaine des mines pour crayon papier, en particulier dans le groupe constitué par les agents glissant, les agents de mise en œuvre, les agents de couplage, les agents dispersants, les lubrifiants, les plastifiants et leurs mélanges, avantageusement dans le groupe constitué par les stéarates tels que le stéarate de calcium, le stéarate de magnésium, le stéarate de sodium, le stéarate de zinc et leurs mélanges, les amides, en particulier les stéaramides telles que l'éthylène bis stéaramide, les cires, les acides gras, le glycérol et ses dérivés tel que le béhénate de glycérol, le dibéhénate de glycérol, le stéarate de glycérol et/ou le diisostéarate de polyglycérol, en particulier le béhénate de glycérol, le siloxane greffé sur du polypropylène, le polypropylène greffé anhydride maléique, les plastifiants phthalate, adipate, benzoate, sébaçate et/ou citrate et leurs mélanges, plus avantageusement dans le groupe constitué par le stéarate de calcium, l'éthylène bis stéaramide, les phthalates et leurs mélanges.
De façon avantageuse la mine selon la présente invention comprend du stéarate de calcium, en particulier en une teneur comprise entre 2 et 10 % en poids, de façon avantageuse entre 3 et 9 % en poids, par rapport au poids total de la mine. Le stéarate de calcium permet d'apporter de la douceur et du glissant sur le papier.
Dans un autre mode de réalisation avantageux, la mine selon la présente invention comprend une amide, en particulier une stéaramide telle que l'éthylène bis stéaramide, avantageusement en une teneur comprise entre 0,5 et 3 % en poids, de façon avantageuse entre 1 et 2,5 % en poids, par rapport au poids total de la mine. L'amide permet d'aider à la dispersion des charges dans la composition et a également un léger effet positif sur le glissant.
La mine selon la présente invention peut également comprendre un phthalate, tel qu'un benzyle phthalate, en particulier un alkyle en C₇-C₉ benzyle phthalate, avantageusement en une teneur comprise entre 0 et 4 % en poids, plus avantageusement entre 1 et 3 % en poids, par rapport au poids total de la mine. Le phthalate est un plastifiant.

Ainsi dans un mode de réalisation particulièrement avantageux, la mine de crayon à papier selon la présente invention comprend, en poids par rapport au poids total de la mine :
- entre 40 et 60 %, avantageusement entre 44 et 50 %, de graphite ;
- entre 15 et 40 %, avantageusement entre 20 et 35 %, d'un polymère;
- entre 5 et 15 %, avantageusement entre 6 et 10 %, d'une charge minérale incolore ou blanche;
- entre 5 et 20 %, avantageusement entre 5 et 15 %, de noir de carbone, en particulier enrobé par ou mélangé avec une polyoléfine ou une cire de polyoléfine;
- entre 0 et 16 %, avantageusement entre 5 et 15 %, d'un additif.

Dans un autre mode de réalisation avantageux, la mine de crayon à papier selon la présente invention ne comprend pas d'huile de palme.

Dans un mode de réalisation particulier de la présente invention, la mine de crayon à papier a un diamètre compris entre 2 et 3,9 mm, de façon avantageuse il s'agit d'une mine ayant un diamètre compris entre 2 et 2,3 mm (mine fine) ou d'une mine ayant un diamètre compris entre 3 et 3,8 mm (mine épaisse) ou encore d'une mine ayant un diamètre compris entre 3,4 et 3,8 mm (mine très épaisse).
Avantageusement la mine selon la présente invention peut avoir une section hexagonale, ronde ou triangulaire, avantageusement ronde ou hexagonale.

La mine de crayon à papier selon la présente invention peut être fabriquée par des procédés bien connus de l'homme du métier.
Par exemple tous les composants sont mélangés entre eux et le mélange obtenu est extrudé aux températures adéquates. La mine obtenue est ensuite refroidie. Elle n'est donc pas calcinée

La mine selon la présente invention présente donc une facilité de gommage améliorée tout en possédant de bonnes propriétés mécaniques, en particulier de résistance à la flexion et/ou de résistance aux chocs.

La présente invention concerne également un crayon à papier comprenant une mine selon la présente invention, en particulier un crayon à papier enrobé de bois ou de matière synthétique de bois, comprenant éventuellement une couche intermédiaire de protection, par exemple tel que décrit dans les demandes de brevet WO 01/43987 et WO 2016/097554.

De façon avantageuse le crayon à papier est obtenu par coextrusion de la mine et de la matière synthétique de bois et éventuellement de la couche intermédiaire de protection.
En particulier la matière synthétique de bois est à base de polymère styrénique et la couche intermédiaire de protection joue également le rôle de couche d'adhésion et peut avantageusement comprendre un mélange d'EVA et de polystyrène.
De façon avantageuse la matière synthétique de bois est expansée, afin de présenter une densité équivalente au bois naturel.
Dans un mode de réalisation particulier de la présente invention, le crayon à papier selon l'invention comprend une couche supplémentaire de décoration, avantageusement de vernis, entourant, en particulier de façon concentrique, la matière synthétique de bois. Avantageusement la couche de décoration est réalisée dans un matériau compatible avec celui de la matière synthétique de bois.
Avantageusement le crayon à papier selon la présente invention peut avoir une section hexagonale, ronde ou triangulaire, avantageusement ronde ou hexagonale.
Da façon avantageuse, il peut comporter un moyen pour effacer, telle qu'une gomme, à l'extrémité non taillée du crayon.
L'invention sera mieux comprise à la lecture de la description des exemples qui suivent qui sont donnés à titre indicatif non limitatif.

### Exemple 1

Dans le tableau ci-dessous sont rassemblés des exemples de compositions de mine de crayon à papier selon la présente invention permettant d'obtenir les caractéristiques d'amélioration de la facilité de gommage, et des propriétés mécaniques suffisantes pour être utilisées dans des crayons à papier.

**Tableau 1**

| **Composition (% en poids) / exemple** | **N°1** | **N°2** | **N°3** | **N°4** |
|---|---|---|---|---|
| Polypropylène | 26 | 26 | | |
| Acrylonitrile Butadiène Styrène (ABS) | | | | 30 |
| Polystyrène | | | 30 | |
| Graphite non expansé | | 23,5 | | |
| Graphite expansé | 47 | 23,5 | 45 | 45 |
| Kaolin | 8 | 8 | 8 | 8 |
| Noir de carbone enrobé de cire de polyéthylène | 9 | 9 | 9 | 9 |
| Additif | 10 | 10 | 8 | 8 |
| Total | 100 | 100 | 100 | 100 |

Des mines ont ensuite été fabriquées à partir de ces compositions par extrusion d'un jonc sur une mono-vis de laboratoire, avec 3 zones chauffées à 170°C et une filière ronde diamètre 2,3mm suivie d'un band de tirage.

### Exemple 2 : tests de la résistance à la rupture 3 points

La résistance à la rupture 3 points des mines N°1 à 4 fabriquées selon l'exemple 1 a été testée selon la norme NF EN ISO 178 de 2016 - Plastiques Détermination des Propriétés en Flexion ... sauf que l'on utilise des joncs extrudés au lieu des éprouvettes injectées type format haltère. Elle a été comparée aux résultats obtenus avec un exemple comparatif ayant la composition N°1 sauf que le graphite est non expansé (exemple comparatif 1).

Les résultats obtenus sont rassemblés dans le tableau 2 suivant :

**Tableau 2**

| **Mines** | **N°1** | **N°2** | **N°3** | **N°4** | **Exemple comparatif 1** |
|---|---|---|---|---|---|
| **Résultats** | 0,684 daN | 0,662 daN | 0,749 daN | 0,692 daN | 0,560 daN |

La résistance à la rupture 3 points des mines selon l'invention et celle de l'exemple comparatif 1 sont donc similaires. Le graphite expansé n'a donc pas d'impact négatif sur la résistance à la rupture 3 points de la mine.

### Exemple 3

L'efficacité de gommage sur du papier a été testée pour les mines N°1 et 2 et a été comparée à la mine de exemple comparatif 1.

Le protocole du test est le suivant :

### EQUIPEMENT :

- L'appareil d'écriture HUTT HST 10 ou équivalent utilisé dans les conditions suivantes :
   - Vitesse d'écriture : 4,5 m/min
   - Angle d'écriture : 70°
   - Autres paramètres : se reporter au tableau 3 ci-dessous
- Papier Iso : AURORA ISO-14145
- L'appareil SpectroEye de X-Rite ou équivalent
- Taille-crayon

**Tableau 3**

| | Paramètres pour réaliser le frottis | Paramètres de gommage |
|---|---|---|
| Type d'article | Mine | Gomme |
| Diamètre mine ou gomme (mm) | 2,2 | De 6,5 à 8 |
| Alimentation papier (mm/min) | 0,2 | 0,2 |
| Masse totale article / support / masse additionnelle (g) | 360-365 | 185-190 |
| Longueur d'écriture pour rotation axiale de l'article (m) | 20 | 20 |
| Longueur d'écriture (m) | 50 | Moitié du frottis |
| Type de Papier | AURORA ISO-14145 | Papier identique au frottis |

ECHANTILLON : De 1 à 3 articles par référence

### MODE OPERATOIRE :

1) Préparer l'article d'écriture dans les supports adaptés, tailler la mine si nécessaire.
2) Réaliser le frottis suivant les paramètres indiqués dans le tableau précédent (seules les positions de 3 à 8 sur le script-mètre seront utilisées).
3) Préparer les gommes dans les supports adaptés.
4) Réaliser le gommage à partir de la moitié du frottis effectué précédemment.
5) Mesurer la densité de noirceur du frottis et du gommage à l'aide du spectroEye (minimum 2 mesures par noirceur) selon DIN 16536 NB puis calculer le Delta correspondant ou exprimer le pourcentage de trace effacée : Efficacité de gommage % = (1 - Noirceur gommée / Noirceur frottis) x 100.

Les résultats obtenus sont rassemblés dans le tableau 4 ci-dessous :

**Tableau 4**

| Mines | **N°1** | **N°2** | **Exemple comparatif 1** |
|---|---|---|---|
| Efficacité de gommage | 86% | 84,5% | 79% |

L'efficacité de gommage est meilleure pour les exemples selon l'invention par rapport à l'exemple comparatif 1, l'efficacité optimale étant obtenue pour la mine N°1.

## Revendications

1. Mine de crayon à papier à base de polymère, extrudable, non expansée, non calcinée, comprenant du graphite, **caractérisée en ce que** 25 à 100% en poids par rapport au poids total du graphite, avantageusement 50 à 100% en poids, dudit graphite consiste en du graphite expansé.

2. Mine de crayon à papier à base de polymère selon la revendication 1, **caractérisée en ce que** 100% en poids du graphite consiste en du graphite expansé.

3. Mine de crayon à papier à base de polymère selon l'une quelconque des revendications 1 ou 2, **caractérisée en ce que** le graphite expansé se trouve sous forme de poudre.

4. Mine de crayon à papier à base de polymère selon l'une quelconque des revendications 1 à 3, **caractérisée en ce qu'**elle comprend, en poids par rapport au poids total de la mine :
- entre 40 et 60 %, avantageusement entre 44 et 50 %, de graphite ;
- entre 15 et 40 %, avantageusement entre 20 et 35 %, d'un polymère;
- entre 5 et 15 %, avantageusement entre 6 et 10 %, d'une charge minérale incolore ou blanche;
- entre 5 et 20 %, avantageusement entre 5 et 15 %, de noir de carbone, en particulier enrobé par ou mélangé avec une polyoléfine ou une cire de polyoléfine;
- entre 0 et 16 %, avantageusement entre 5 et 15 %, d'un additif.

5. Mine de crayon à papier selon l'une quelconque des revendications 1 à 4, **caractérisée en ce que** le polymère est choisi dans le groupe constitué par une polyoléfine un polymère styrénique et leurs mélanges, avantageusement dans le groupe constitué par du polyéthylène, du polypropylène, du polystyrène, un copolymère styrène-acrylonitrile un copolymère acrylonitrile-butadiène-styrène et leurs mélanges.

6. Mine de crayon à papier selon l'une quelconque des revendications 4 ou 5, **caractérisée en ce que** la charge minérale incolore ou blanche est choisie dans le groupe constitué par une argile, du talc, du nitrure de bore, de la silice, du carbonate de calcium, du mica, de la poudre de stéatite et leurs mélanges, avantageusement il s'agit d'une argile.

7. Mine de crayon à papier selon la revendication 6, **caractérisée en ce que** la charge minérale est une argile choisie dans le groupe constitué par la montmorillonite, la bentonite, le kaolin et leurs mélanges, avantageusement il s'agit du kaolin.

8. Mine de crayon à papier selon l'une quelconque des revendications 4 à 7, **caractérisée en ce que** l'additif est choisi dans le groupe constitué par les agents glissant, les agents de mise en œuvre, les agents de couplage, les agents dispersants, les lubrifiants, les plastifiants et leurs mélanges, avantageusement dans le groupe constitué par les stéarates tels que le stéarate de calcium, le stéarate de magnésium, le stéarate de sodium, le stéarate de zinc et leurs mélanges, les amides telles que l'éthylène bis stéaramide, les cires, les acides gras, le glycérol et ses dérivés tel que le béhénate de glycérol, le siloxane greffé sur du polypropylène, le polypropylène greffé anhydride maléique, les plastifiants phthalate, adipate, benzoate, sébaçate et/ou citrate et leurs mélanges.

9. Mine de crayon à papier selon l'une quelconque des revendications 1 à 8, **caractérisée en ce qu'**elle est extrudée.

10. Crayon à papier comprenant une mine selon l'une quelconque des revendications 1 à 9.

## Patentansprüche

1. Extrudierbare, nicht expandierte, nicht kalzinierte, Graphit umfassende Bleistiftmine auf Polymerbasis, **dadurch gekennzeichnet, dass** 25 bis 100 Gew.-%, bezogen auf das Gesamtgewicht des Graphits, vorzugsweise 50 bis 100 Gew.-%, des Graphits aus expandiertem Graphit bestehen.

2. Bleistiftmine auf Polymerbasis nach Anspruch 1, **dadurch gekennzeichnet, dass** 100 Gew.-% des Graphits aus expandiertem Graphit bestehen.

3. Bleistiftmine auf Polymerbasis nach einem der Ansprüche 1 oder 2, **dadurch gekennzeichnet, dass** der expandierte Graphit in Pulverform vorliegt.

4. Bleistiftmine auf Polymerbasis nach einem der Ansprüche 1 bis 3, **dadurch gekennzeichnet, dass** sie, bezogen auf das Gesamtgewicht der Mine, umfasst:
- zwischen 40 und 60 %, vorzugsweise zwischen 44 und 50 %, Graphit;
- zwischen 15 und 40 %, vorzugsweise zwischen 20 und 35 %, eines Polymers;
- zwischen 5 und 15 %, vorzugsweise zwischen 6 und 10 %, eines farblosen oder weißen mineralischen Füllstoffs;
- zwischen 5 und 20 %, vorzugsweise zwischen 5 und 15 %, Ruß, insbesondere beschichtet mit oder vermischt mit einem Polyolefin oder einem Polyolefinwachs;
- zwischen 0 und 16 %, vorzugsweise zwischen 5 und 15 %, eines Zusatzstoffs.

5. Bleistiftmine nach einem der Ansprüche 1 bis 4, **dadurch gekennzeichnet, dass** das Polymer aus der Gruppe ausgewählt ist, die aus einem Polyolefin, einem Styrolpolymer und Mischungen davon besteht, vorzugsweise aus der Gruppe, die aus Polyethylen, Polypropylen, Polystyrol, Styrol-Acrylnitril-Copolymer, Acrylnitril-Butadien-Styrol-Copolymer und Mischungen davon besteht.

6. Bleistiftmine nach einem der Ansprüche 4 oder 5, **dadurch gekennzeichnet, dass** der farblose oder weiße mineralische Füllstoff aus der Gruppe ausgewählt ist, die aus Ton, Talk, Bornitrid, Siliciumdioxid, Calciumcarbonat, Glimmer, Specksteinpulver und Mischungen davon besteht, wobei es vorzugsweise ein Ton ist.

7. Bleistiftmine nach Anspruch 6, **dadurch gekennzeichnet, dass** der mineralische Füllstoff ein Ton ist, der aus der Gruppe ausgewählt ist, die aus Montmorillonit, Bentonit, Kaolin und Mischungen davon besteht, wobei es vorzugsweise Kaolin ist.

8. Bleistiftmine nach einem der Ansprüche 4 bis 7, **dadurch gekennzeichnet, dass** der Zusatzstoff aus der Gruppe ausgewählt ist, die aus Gleitmitteln, Verarbeitungsmitteln, Haftvermittlern, Dispergiermitteln, Schmiermitteln, Weichmachern und Mischungen davon, vorzugsweise aus der Gruppe, die aus Stearaten wie Calciumstearat, Magnesiumstearat, Natriumstearat, Zinkstearat und Mischungen davon, Amiden wie Ethylenbisstearamid, Wachsen, Fettsäuren, Glycerin und seinen Derivate wie Glycerinbehenat, polypropylengepfropftem Siloxan, polypropylengepfropftem Maleinsäureanhydrid, Phthalat-, Adipat-, Benzoat-, Sebacat- und/oder Citrat-Weichmachern und Mischungen davon besteht.

9. Bleistiftmine nach einem der Ansprüche 1 bis 8, **dadurch gekennzeichnet, dass** sie extrudiert ist.

10. Bleistift, umfassend eine Mine nach einem der Ansprüche 1 bis 9.

## Claims

1. Polymer-based, extrudable, unexpanded, uncalcined pencil lead comprising graphite, **characterized in that** 25 to 100% by weight relative to the total weight of graphite, preferably 50 to 100% by weight, of said graphite consists of expanded graphite.

2. Polymer-based pencil lead according to claim 1, **characterized in that** 100% by weight of the graphite consists of expanded graphite.

3. Polymer-based pencil lead according to either claim 1 or claim 2, **characterized in that** the expanded graphite is in powder form.

4. Polymer-based pencil lead according to any of claims 1 to 3, **characterized in that** it comprises, in percentage by weight relative to the total weight of the lead:
- between 40 and 60%, advantageously between 44 and 50%, of graphite;
- between 15 and 40%, advantageously between 20 and 35%, of a polymer;
- between 5 and 15%, advantageously between 6 and 10%, of a colorless or white mineral filler;
- between 5 and 20%, advantageously between 5 and 15%, of carbon black, in particular coated with or mixed with a polyolefin or a polyolefin wax;
- between 0 and 16%, advantageously between 5 and 15%, of an additive.

5. Pencil lead according to any of claims 1 to 4, **characterized in that** the polymer is selected from the group consisting of a polyolefin, a styrenic polymer, and mixtures thereof, advantageously from the group consisting of polyethylene, polypropylene, polystyrene, a styrene-acrylonitrile copolymer, an acrylonitrile-butadiene-styrene copolymer, and mixtures thereof.

6. Pencil lead according to either claim 4 or claim 5, **characterized in that** the colorless or white mineral filler is selected from the group consisting of a clay, talc, boron nitride, silica, calcium carbonate, mica, steatite powder, and mixtures thereof, and is advantageously a clay.

7. Pencil lead according to claim 6, **characterized in that** the mineral filler is a clay selected from the group consisting of montmorillonite, bentonite, kaolin, and mixtures thereof, and is advantageously kaolin.

8. Pencil lead according to any of claims 4 to 7, **characterized in that** the additive is selected from the group consisting of slip agents, processing agents, coupling agents, dispersants, lubricants, plasticizers, and mixtures thereof, advantageously from the group consisting of stearates such as calcium stearate, magnesium stearate, sodium stearate, zinc stearate, and mixtures thereof, amides such as ethylene bis stearamide, waxes, fatty acids, glycerol and derivatives thereof such as glyceryl behenate, siloxane grafted on polypropylene, maleic anhydride-grafted polypropylene, the plasticizers phthalate, adipate, benzoate, sebacate and/or citrate, and mixtures thereof.

9. Pencil lead according to any of claims 1 to 8, **characterized in that** it is extruded.

10. Pencil comprising a lead according to any of claims 1 to 9.
